# EUROPEAN PATENT SPECIFICATION

(11) **EP 4 492 270 B1**
(45) Date of publication and mention of the grant of the patent: **02.12.2026**
(21) Application number: 23766621.9
(22) Date of filing: 27.02.2023
(51) Int. Cl.: G06F 21/57, B60R 25/24, G06F 8/65, G06F 21/44, G06F 21/73

(54) **ELECTRONIC CONTROL DEVICE AND AUTHENTICATION METHOD**
ELEKTRONISCHE STEUERVORRICHTUNG UND AUTHENTIFIZIERUNGSVERFAHREN
DISPOSITIF DE COMMANDE ÉLECTRONIQUE ET PROCÉDÉ D'AUTHENTIFICATION

(30) Priority: 10.03.2022 JP 2022037417
(43) Date of publication of application: 15.01.2025
(73) Proprietor: Astemo, Ltd., Tokyo 100-0004 (JP)
(72) Inventor: TAKEI, Masayuki, Hitachinaka-shi, Ibaraki 312-8503 (JP); FURUYA, Daisuke, Hitachinaka-shi, Ibaraki 312-8503 (JP); KOBAYASHI, Takuya, Hitachinaka-shi, Ibaraki 312-8503 (JP)
(74) Representative: Grünecker Patent- und Rechtsanwälte PartG mbB
(86) International application number: PCT/JP2023/007018
(87) International publication number: WO 2023/171443

(56) References cited:
- EP-A1- 3 570 193
- EP-A2- 1 916 612
- JP-A- 2014 056 600
- JP-A- H09 134 307

## Description

### TECHNICAL FIELD

The present invention relates to an electronic control device mounted in a vehicle and relates to an authentication method executed by an electronic control device.

### BACKGROUND ART

An electronic control device, which is mounted in a vehicle and controls in-vehicle equipment, needs to be protected from unauthorized modification of data stored in a nonvolatile storage device (ROM) for cybersecurity measures and the like. As an example for controlling such access to the data in the ROM, a technique has been proposed in which in the case of setting a key code (secret information) in the ROM, access is controlled according to an authentication result using the key code.

Document EP 3 570 193 A1 describes an authentication method for writing software objects into an ECU using first and second identification codes for the manufacturer of the ECU and the manufacturers of the vehicles respectively.

Document EP 1 916 612 A2 describes reprogramming ECUs using an encrypted access key file encrypted with a check value derived from the reprogram data.

### REFERENCE DOCUMENT LIST

### PATENT DOCUMENT

Patent Document 1: JP 2014-222546 A

### SUMMARY OF THE INVENTION

### PROBLEM TO BE SOLVED BY THE INVENTION

In general, in order to deal with annual improvements to vehicles, horizontal deployment of vehicle models, and the like, a software program that operates using a mass-produced electronic control device with security measures is subjected to, for example, redevelopment and modification. These redevelopment and modification works may be performed using an electronic control device for development, which is different from the mass-produced electronic control device. At this time, a situation may arise in which the security authentication information set in the software program created for application to the electronic control device for mass production does not conform to the electronic control device for development, and data cannot be rewritten.

An object of an aspect of the present invention is to achieve rewriting of software program data for mass production in an electronic control device for development while maintaining effective security measures.

### MEANS FOR SOLVING THE PROBLEM

In an aspect of the present invention, an electric control device includes a processor, a nonvolatile storage device that is electronically data rewritable, and an interface that enables communication with an external data rewriting device. In the electric control device, a hardware ID unique to the electronic control device and a software ID associated with a software program are set in the nonvolatile storage device, and the data rewriting device is permitted to rewrite data of the nonvolatile storage device depending on a result of collating the hardware ID with the software ID. Here, in the electronic control device, a software ID for development used during development of the electronic control device and a software ID for mass-production used during mass-production of the electronic control device are set as the software ID in the nonvolatile storage device. Then, the processor acquires the hardware ID and the software ID for mass-production from the nonvolatile storage device, and collates the hardware ID with the software ID for mass-production. As a result, when the hardware ID does not conform to the software ID for mass-production, the processor further acquires the software ID for development from the nonvolatile storage device to collate the hardware ID with the software ID for development.

### EFFECTS OF THE INVENTION

According to an aspect of the present invention, it is possible to achieve rewriting of software program data for mass production in an electronic control device for development while maintaining effective security measures.

### BRIEF DESCRIPTION OF THE DRAWINGS

FIG. 1 is a diagram illustrating an example of an overall configuration of an embodiment of the present invention.
FIG. 2 is a diagram illustrating an example of the hardware configuration of an ECU.
FIG. 3 is a diagram illustrating an example of the internal configuration of a ROM of an ECU and ID authentication processing.
FIG. 4 is a diagram illustrating an example of the internal configuration of a ROM of an ECU and ID authentication processing.
FIG. 5 is a diagram illustrating an example of the internal configuration of a ROM of an ECU and ID authentication processing.
FIG. 6 is a diagram illustrating an example of the internal configuration of a ROM of an ECU and ID authentication processing.
FIG. 7 is a diagram illustrating an example of patterns of ID authentication processing.
FIG. 8 is a diagram of a flowchart illustrating an example of ID authentication processing.
FIG. 9 is a diagram illustrating an example of a generation method of an ID for mass-production.

### MODE FOR CARRYING OUT THE INVENTION

Hereinafter, an embodiment of the present invention will be described with reference to the drawings. Note that the present invention is not limited to the embodiment described in the present specification, and other embodiments and modifications thereof can be combined as appropriate.

### 1. Technical background and the like to which present embodiment is applied

First, a detailed description will be given of the technical background to which the present embodiment may be applied. As an aspect of the development process of an electronic control device (electronic control unit (ECU)) mounted in a vehicle such as an automobile, the ECU and a software program installed in the ECU are developed by the ECU developer (supplier). Then, the ECU for development used at the time of ECU development and the data of the program for development stored in the ROM is delivered from the developer to the automobile manufacturer. Then, when vehicle experiments and the like are conducted by the automobile manufacturer and it is confirmed that the program conforms to the vehicle, the ECU and the ROM storing the program are mass-produced by the developer. Then, such an ECU for mass production and ROM storing the program for mass production are delivered to an automobile manufacturer or the like.

Here, in the ECU mounted in a vehicle, ID authentication is performed when accessing data stored in the ROM as an example of a method for preventing unauthorized modification of data stored in the ROM. More specifically, a debugging tool for development such as a Joint Test Action Group (JTAG) communication tool connected via a debugging interface for development sets a hardware ID, which is an ECU-specific ID, in a predetermined region of the ROM inside a microcomputer installed in the ECU. Then, when accessing the ROM via the debugging interface for development thereafter, ID authentication of inputting the hardware ID set in the ROM is required in the debugging tool for development. As a result, it is possible to prevent unauthorized rewriting of ROM data of the ECU from a debugging tool for development or the like.

However, when this ID authentication function is activated, an ID authentication function using software ID set in the software program stored in the ROM is also activated. More specifically, in this ID authentication, the software ID set in the ROM is collated with a hardware ID when ROM data is rewritten using a data rewriting tool such as a controller area network (CAN) communication tool connected via a data rewriting interface. Then, rewriting of the ROM data by the data rewriting tool is permitted only when the IDs match.

In general, in order to deal with annual improvements to vehicles, horizontal deployment of vehicle models, and the like, an automobile manufacturer performs redevelopment and modification of a mass-produced software program. These redevelopment and modification works may be performed using an ECU for development by the automobile manufacturer. However, when the ID authentication function is activated as described above, the software ID included in data set in the ROM of the ECU for mass-production does not match the hardware ID set in the ROM of the ECU for development. Hence, rewriting of ROM data using the data rewriting tool is not permitted due to the ID authentication, and program modification work using the data rewriting tool cannot be done by the automobile manufacturer. In this case, the problem is solved by delivering an ECU for development in which a hardware ID for mass-production is set or delivering data of a ROM in which a hardware ID of an ECU for development is set from the ECU developer to the automobile manufacturer, for example. However, in a situation in which there are more annual improvements and horizontal deployment of vehicle models than new program developments, such measures for problem solving require large amounts of labor.

Against this background, the present embodiment provides a method for enabling rewriting of ROM data by a data rewriting tool in an ECU for development in a state in which ECU security measures are activated.

### 2. Overall configuration of present embodiment

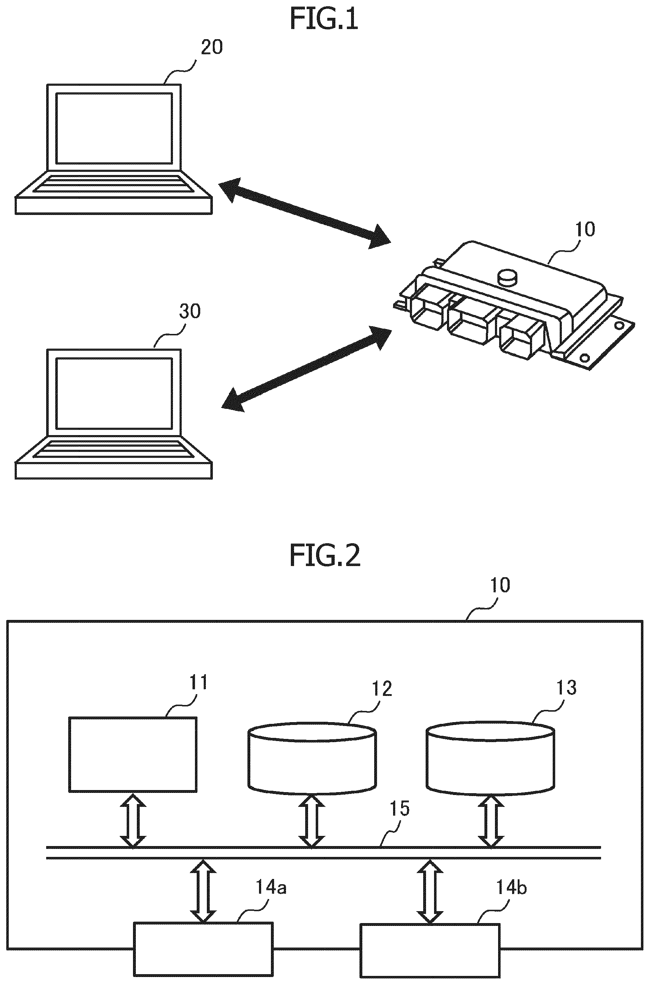

FIG. 1 is a diagram for describing an overall configuration of the present embodiment. In the present embodiment, a debugging tool 20 for development and a data rewriting tool 30 are connected to an ECU 10 as necessary when developing or modifying a software program operating on ECU 10 mounted in a vehicle.

ECU 10 is an electronic control device that electronically controls in-vehicle equipment. ECU 10 includes a microcomputer including a processor and a memory (detailed configuration will be described later), and executes a software program to perform electronic control of various in-vehicle equipment.

Debugging tool 20 for development is a computer mainly used for testing, debugging, and the like of integrated circuits and boards at the time of development of ECU 10. In the present embodiment, debugging tool 20 for development is connected to ECU 10 by JTAG communication signal lines (clock, data input, data output, status control, and the like) to exchange data with ECU 10 by JTAG communication. Note that such debugging tool 20 for development may use other schemes (e.g., AUD, UART, DAP, or the like).

Data rewriting tool 30 is a computer mainly used for rewriting programs at the time of modification of the software program operating on ECU 10. In the present embodiment, data rewriting tool 30 is connected to ECU 10 by a CAN bus to exchange data with ECU 10 by CAN communication. Note that such data rewriting tool 30 can be connected to ECU 10 by other schemes such as Ethernet (registered trademark), FlexRay, and the like.

### 3. Hardware configuration of ECU

Next, the hardware configuration of ECU 10 will be described. As illustrated in FIG. 2, ECU 10 includes a processor 11, a RAM 12, a ROM 13, communication interfaces 14a and 14b, and an internal bus 15 communicatively connecting these components.

Processor 11 is hardware that executes a set of instructions (data transfer, calculation, processing, control, management, and the like) described in the program, and is formed of an arithmetic unit, a register that stores instructions and information, peripheral circuits, and the like.

RAM 12 is formed of a volatile memory (static RAM or the like) that loses data when the power supply is interrupted, and provides a temporary storage region used by processor 11 during operation.

ROM 13 is formed of a nonvolatile memory (flash ROM or the like) in which data can be electrically rewritten. ROM 13 stores control programs (e.g., programs for controlling a vehicle engine, automatic transmission, fuel injection device, and the like) according to functions of ECU 10 and various kinds of data used for processing of the programs. Moreover, in the present embodiment, a hardware ID and a software ID used in ID authentication processing are stored in ROM 13. Furthermore, a program and data for performing the ID authentication processing are stored in ROM 13.

Communication interfaces 14a and 14b provide functions for enabling communication with other devices connected to ECU 10. Specifically, communication interface 14a is an interface for enabling communication with external debugging tool 20 for development. Communication interface 14b is an interface for enabling communication with external data rewriting tool 30. Note that although not illustrated, ECU 10 may further include a communication interface that enables communication with an in-vehicle network (CAN network or the like) or in-vehicle equipment related to control (e.g., various sensors, actuators, and the like), for example, using CAN communication or the like or another communication scheme (on-off, analog signals or the like).

Internal bus 15 is a path for exchanging data among the devices, and includes an address bus for transferring addresses, a data bus for transferring data, and a control bus that transmits timings for actually performing input and output by the address bus and the data bus and control information.

### 4. Internal region of ROM and ID authentication pattern

Next, an internal region of ROM 13 of ECU 10 and ID authentication patterns will be described. In the present embodiment, there are two types of ECUs 10 which are an ECU 10A for development used in a development process and modification process of ECU 10, and an ECU 10B for mass-production mass-produced and mounted in a vehicle.

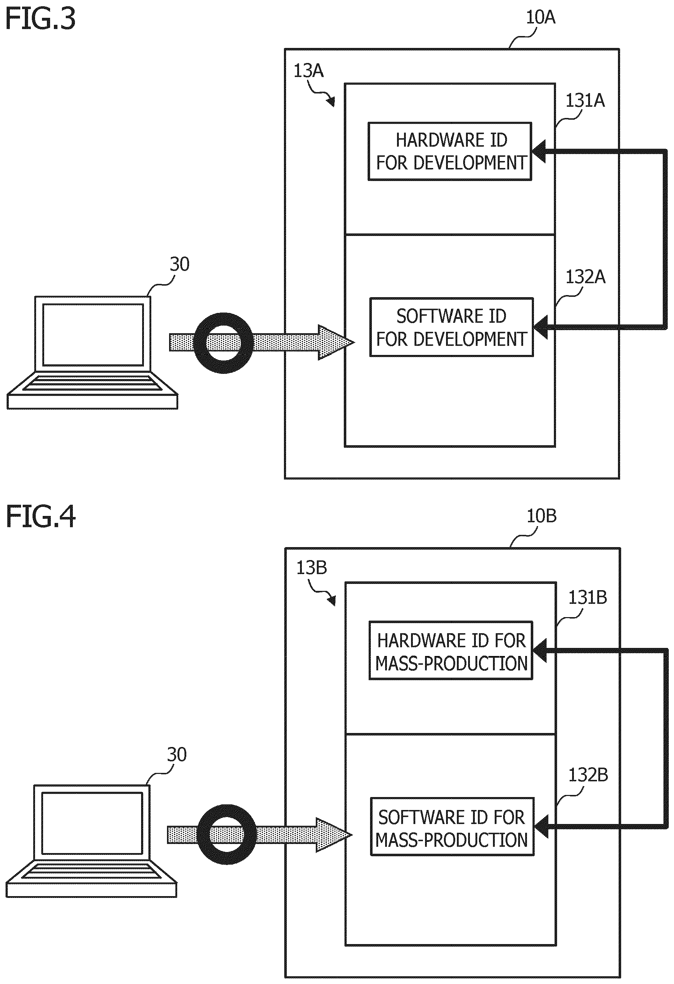

FIG. 3 mainly illustrates an example of an internal region of a ROM 13A included in ECU 10A for development in a development process of ECU 10 performed by the developer. ROM 13A includes an unrewritable region 131A in which data is basically not rewritable from the outside, and a rewritable region 132A in which data is rewritable from the outside. A hardware ID for development is set in unrewritable region 131A by debugging tool 20 for development when ECU 10A is shipped. This hardware ID for development is used for ID authentication when accessing data stored in ROM 13A of ECU 10A after the ID authentication function is activated at the first access to ECU 10. Additionally, a software program for development is stored in rewritable region 132A, and a software ID for development that matches the hardware ID for development is set.

The ID authentication processing in this example is as follows. First, when authenticating access to ROM 13A by debugging tool 20 for development, an ID input in debugging tool 20 for development is collated with the hardware ID for development set in ROM 13A. Then, if the IDs match, rewriting of data of ROM 13A by debugging tool 20 for development is permitted. That is, the user of debugging tool 20 for development can rewrite data of ROM 13 if the user knows the hardware ID for development. On the other hand, for access to ROM 13A by data rewriting tool 30, the hardware ID of unrewritable region 131A of ROM 13 is collated with the software ID of rewritable region 132A. Then, if the IDs match, rewriting of ROM 13A by data rewriting tool 30 is permitted. In this example, the hardware ID for development of unrewritable region 131A matches the software ID for development of rewritable region 132A. Hence, rewriting of data of rewritable region 132A of ROM 13 by data rewriting tool 30 is permitted.

Next, FIG. 4 mainly illustrates an example of an internal region of ROM 13B included in ECU 10B for mass-production after ECU 10 is mass-produced. As in the case of ECU 10A for development, ROM 13B includes an unrewritable region 131B in which data is basically not rewritable, and a rewritable region 132B in which data is basically rewritable. A hardware ID for mass-production is set in unrewritable region 131B by debugging tool 20 for development when ECU 10B is shipped. This hardware ID for mass-production is used for ID authentication when accessing data stored in ROM 13B of ECU 10B after the ID authentication function is activated at the first access to ECU 10B. Additionally, a software program for mass production is stored in rewritable region 132B, and a software ID for mass-production that matches the hardware ID for mass-production is set.

The ID authentication processing in this example is as follows. First, when authenticating access to ROM 13B by debugging tool 20 for development, an ID input in debugging tool 20 for development is collated with the hardware ID for mass-production set in ROM 13B. Then, if the IDs match, rewriting of data of ROM 13B by debugging tool 20 for development is permitted. In this case, the user of debugging tool 20 for development can rewrite data of ROM 13 if the user knows the hardware ID for mass-production. By ensuring the confidentiality of the hardware ID for mass-production, security measures are maintained effectively. On the other hand, for access to ROM 13B by data rewriting tool 30, the hardware ID of unrewritable region 131B of ROM 13 is collated with the software ID of rewritable region 132B. Then, if the IDs match, rewriting of data of ROM 13B by data rewriting tool 30 is permitted. In this example, the hardware ID for mass-production of unrewritable region 131B matches the software ID for mass-production of rewritable region 132B. Hence, rewriting of data of rewritable region 132B of ROM 13 by data rewriting tool 30 is permitted.

Next, a description will be given of a case in which redevelopment or modification of a mass-produced software program is performed using ECU 10A for development to deal with annual improvements to vehicles, horizontal deployment of vehicle models, etc., described earlier. In this case, data stored in rewritable region 132B of ROM 13B of ECU 10B for mass-production is set in rewritable region 132A of ROM 13A of ECU 10A for development.

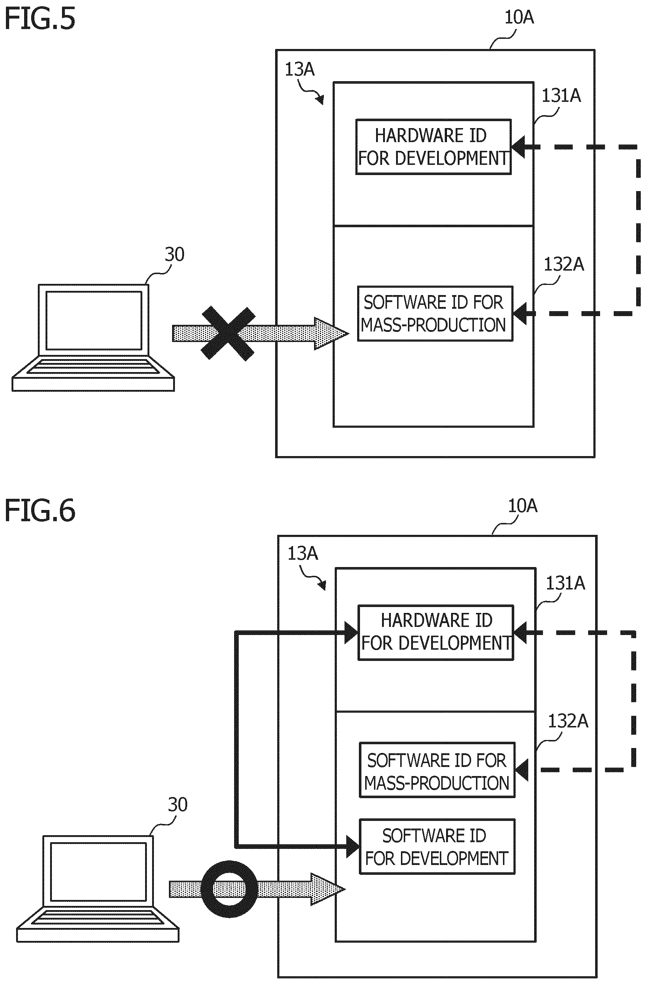

Here, FIG. 5 illustrates an example of the internal region of the conventional ROM 13A and ID authentication processing in this situation. Conventionally, only the software ID for mass-production has been set in rewritable region 132B of ROM 13B for mass-production. Hence, when the data is set in rewritable region 132A of ROM 13A of ECU 10A for development, only the software ID for mass-production is set in rewritable region 132A. In this case, in the ID authentication processing, the hardware ID for development in unrewritable region 131A does not match the software ID for mass-production set in rewritable region 132A. Hence, rewriting of data of rewritable region 132A of ROM 13 by data rewriting tool 30 is prohibited.

On the other hand, FIG. 6 illustrates an example of the internal region of the ROM 13A of the present embodiment and ID authentication processing in this situation. In the present embodiment, not only the software ID for mass-production, but also the software ID for development is set in rewritable region 132B of ROM 13B of ECU 10B for mass-production. Hence, when the data is set in rewritable region 132A of ROM 13A of ECU 10A for development, both the software ID for mass-production and the software ID for development are set in rewritable region 132A. In this case, as illustrated in FIG. 6, in the ID authentication processing, the hardware ID for development in unrewritable region 131A does not match the software ID for mass-production set in rewritable region 132A. However, in this case, in the present embodiment, the hardware ID for development in unrewritable region 131A is further collated with the software ID for development set in rewritable region 132A. In this case, the IDs match, and therefore rewriting of data in rewritable region 132B of ROM 13 by data rewriting tool 30 is permitted.

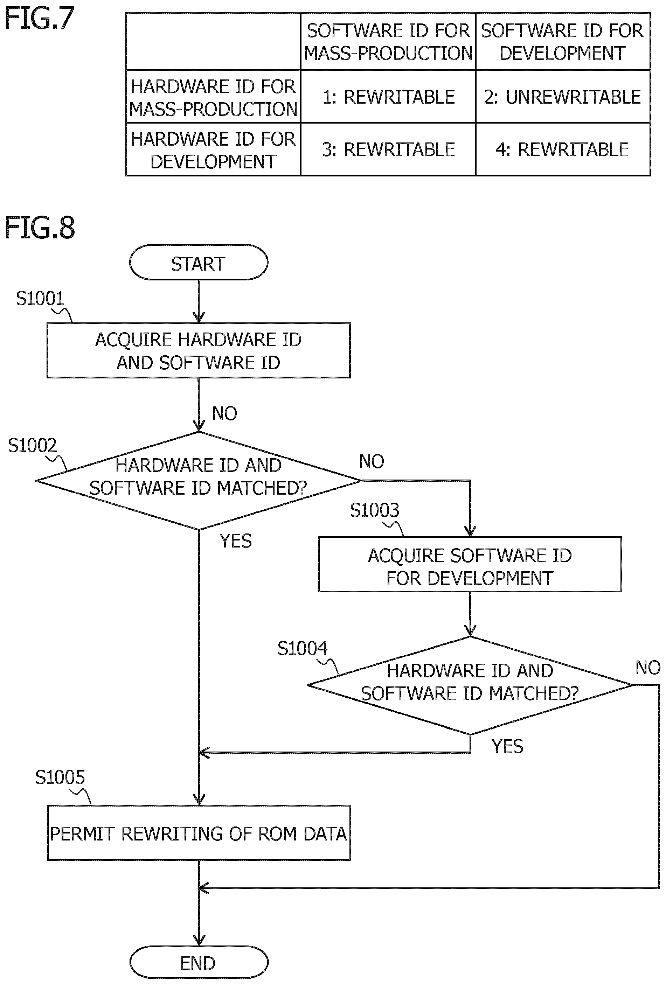

FIG. 7 shows whether or not rewriting of data in rewritable region 132 of ROM 13 by the data rewriting tool 30 is permitted for each combination of hardware ID and software ID in such ID authentication processing in a matrix.

### Pattern 1: Hardware ID for mass-production and software ID for mass-production

This is ID authentication processing in ECU 10B for mass-production, and is a pattern in which the software ID for mass-production is set in rewritable region 132B of ROM 13B (pattern of FIG. 4 above). In this case, the hardware ID for mass-production in unrewritable region 131B matches the software ID for mass-production in rewritable region 132B. Accordingly, rewriting of data of ROM 13B by data rewriting tool 30 is permitted.

### Pattern 2: Hardware ID for mass-production and software ID for development

This is ID authentication processing in ECU 10B for mass-production, and is a pattern in which the software ID for development is set in rewritable region 132B of ROM 13B. In this situation, the hardware ID for mass-production in unrewritable region 131B does not match the software ID for development in rewritable region 132B. Accordingly, rewriting of data of ROM 13B by data rewriting tool 30 is prohibited.

### Pattern 3: Hardware ID for development and software ID for mass-production

This is ID authentication processing in ECU 10A for development, and is a pattern in which the software ID for mass-production is set in rewritable region 132A of ROM 13A. In this case, in the conventional state illustrated in FIG. 5, rewriting of ROM 13B by data rewriting tool 30 is prohibited. However, as illustrated in FIG. 6, in the present embodiment, the software ID for development is also set in rewritable region 132A of ROM 13A. In this case, the hardware ID for development in unrewritable region 131A matches the software ID for development in rewritable region 132A. Accordingly, rewriting of ROM 13B by data rewriting tool 30 is permitted.

### Pattern 4: Hardware ID for development and software ID for development

This is ID authentication processing in ECU 10A for development, and is a pattern in which the software ID for development is set in rewritable region 132A of ROM 13A (pattern of FIG. 3 above). In this case, the hardware ID for development in unrewritable region 131A matches the software ID for development in rewritable region 132A. Accordingly, rewriting of data of ROM 13B by data rewriting tool 30 is permitted.

### 4. ID authentication processing

FIG. 7 is a flowchart illustrating the ID authentication processing in the present embodiment described above. This ID authentication processing is achieved by loading a program stored in ROM 13 of ECU 10 into RAM 12 and executing the program by processor 11.

In step 1001 (expressed as S1001 in FIG. 7, the same applies to following steps), processor 11 acquires a hardware ID and a software ID used for ID authentication. More specifically, processor 11 acquires the hardware ID set in unrewritable region 131 of ROM 13 of ECU 10 and the software ID set in rewritable region 132 of ROM 13.

In step 1002, processor 11 determines whether or not the hardware ID matches the software ID. If the IDs do not match, the processing proceeds to step 1003 (No), and if the IDs match, the processing proceeds to step 1005 (Yes).

In step 1003, processor 11 further acquires the software ID for development set in rewritable region 132 of ROM 13.

In step 1004, processor 11 determines whether or not the hardware ID matches the software ID for development acquired in step 1003. If the IDs match, the processing proceeds to step 1005 (Yes), and if the IDs do not match, the processing is terminated.

In step 1005, processor 11 permits rewriting of data of rewritable region 132 of ROM 13 by data rewriting tool 30. Note that when the processing is terminated without performing the processing of step 1005, rewriting of data of rewritable region 132 of ROM 13 by data rewriting tool 30 is prohibited.

### 5. Effect and modification of present embodiment

According to the present embodiment, in ID authentication processing regarding access to ROM 13 of ECU 10, when the hardware ID for development set in ROM 13 does not match the software ID for mass-production, the authentication is performed by also using the software ID for development. Hence, when such ID authentication processing is executed in ECU 10A for development, rewriting of data by data rewriting tool 30 is permitted even when data of ROM 13B for mass-production is applied to ECU 10A for development. Accordingly, when performing redevelopment or modification of a mass-produced software program, the software program for mass-production can be modified using ECU 10A for development while effectively maintaining the ID authentication function of ECU 10 itself. As a result, the labor required to address security issues to make such modifications can be significantly reduced.

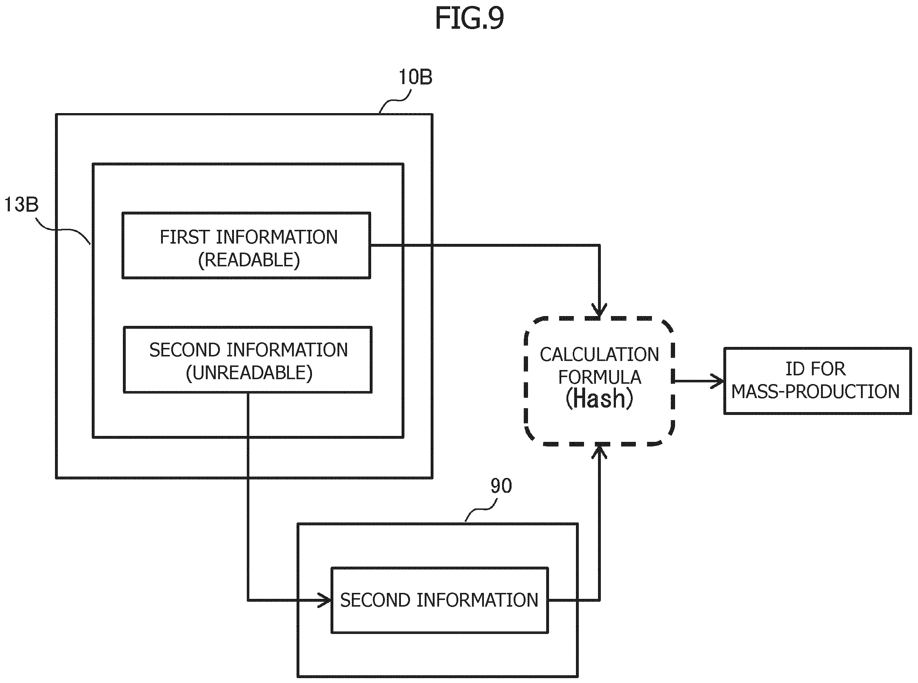

Moreover, in the present embodiment, since the ID authentication function of ECU 10 is thus maintained effectively, it is still possible to prevent unauthorized access to ECU 10B for mass-production from debugging tool 20 for development or the like by ID authentication processing, for example. Here, an example of an ID generation method for making security measures in ECU 10B for mass-production more robust will be described with reference to FIG. 9. As illustrated in FIG. 9, the ROM 13B of ECU 10B for mass-production stores both first information (corresponding to public key) that is readable from the outside, and second information (corresponding to private key) that is unreadable from the outside. Of the two pieces of information, the second information unreadable from the outside is also retained in a key management server 90. Then, when generating an ID to be used in ECU 10B for mass-production, such first and second information are used as inputs, and calculations are performed using a predetermined formula (e.g., hash function) in which the output for the input is constant. Then, the output result (hash value) of the calculation is used as the ID for ECU 10B for mass-production. This makes it possible to generate a unique ID using the unique information stored in ROM 13B of ECU 10B for mass-production, and also prevents external identification of the information used as input for the calculation formula. Note that this ID generation method is also applicable to IDs used in ECU 10A for development.

Note that while the ID authentication processing of the present embodiment determines whether or not the hardware ID and the software ID match, these IDs do not need to be a perfect match. That is, the hardware ID and software ID may be any combination of values, as long as the combination is such that when the hardware ID is collated with the software ID, it can be determined whether the hardware ID conforms to software ID.

Additionally, while the ID authentication processing described above permits or prohibits rewriting of data of ROM 13 by data rewriting tool 30 depending on the result of collating the hardware ID with the software ID, the processing may control access to data of ROM 13.

### 6. Other Matters

The embodiments of the present invention described above are merely some of the embodiments conceivable within the technical scope of the present invention, and are disclosed as examples of the present invention. Thus, the embodiments are not intended to limit the technical scope of the present invention. Moreover, the functional configurations and physical configurations in the embodiments are not limited to the aspect described earlier. For example, the functions and physical resources can be implemented in an integrated manner, or conversely, further distributed, or even added, deleted, or replaced by other configurations for some parts of the configuration.

### REFERENCE SYMBOL LIST

- 10: ECU
- 10A: ECU for development
- 10B: ECU for mass-production
- 11: Processor
- 13: ROM
- 131: Unrewritable region
- 132: Rewritable region
- 20: Debugging tool for development
- 30: Data rewriting tool

## Claims

1. An electronic control device comprising a processor, a nonvolatile storage device that is electrically data rewritable, and an interface that enables communication with an external data rewriting device, the nonvolatile storage device being set with a hardware ID unique to the electronic control device and a software ID associated with a software program, and the data rewriting device being permitted to rewrite data of the nonvolatile storage device depending on a result of collating the hardware ID with the software ID,
wherein a software ID for development used during development of the electronic control device and a software ID for mass-production used during mass-production of the electronic control device are set as the software ID in the nonvolatile storage device, and
wherein the processor acquires the hardware ID and the software ID for mass-production from the nonvolatile storage device, collates the hardware ID with the software ID for mass-production, and when the hardware ID does not conform to the software ID for mass-production, further acquires the software ID for development from the nonvolatile storage device to collate the hardware ID with the software ID for development.

2. The electronic control device according to claim 1, wherein the hardware ID is set in a region of the nonvolatile storage device that is not rewritable from outside, and the software ID is set in a region of the nonvolatile storage device that is rewritable from outside.

3. The electronic control device according to claim 1 further comprising an interface that enables communication with an external debugging tool for development, wherein
the processor collates the hardware ID with an ID input to the debugging tool for development, and permits rewriting of data of the nonvolatile storage device by the debugging tool for development on the basis of a result of the collation.

4. The electronic control device according to claim 1, wherein the hardware ID is generated using an output result of calculation performed with a predetermined calculation formula using, as an input, first information that is stored in the nonvolatile storage device and is readable from the outside and second information that is stored in the nonvolatile storage device and is unreadable from the outside.

5. An authentication method executed by a processor of an electronic control device, the electronic control device comprising the processor, a nonvolatile storage device that is electrically data rewritable, and an interface that enables communication with an external data rewriting device, the nonvolatile storage device being set with a hardware ID unique to the electronic control device and a software ID associated with a software program, and the data rewriting device being permitted to rewrite data of the nonvolatile storage device depending on a result of collating the hardware ID with the software ID, the method causing the processor to perform the steps of:
acquiring, from the nonvolatile storage device in which a software ID for development used during development of the electronic control device and a software ID for mass-production used during mass-production of the electronic control device are set as the software ID, the hardware ID, and the software ID for mass-production, and collating the hardware ID with the software ID for mass-production; and when the hardware ID does not conform to the software ID for mass-production, further acquiring the software ID for development from the nonvolatile storage device, and collating the hardware ID with the software ID for development.

## Patentansprüche

1. Elektronische Steuervorrichtung, aufweisend einen Prozessor, eine nichtflüchtige Speichervorrichtung, deren Daten elektrisch wiederbeschreibbar sind, und eine Schnittstelle, die eine Kommunikation mit einer externen Datenumschreibvorrichtung ermöglicht, wobei in der nichtflüchtigen Speichervorrichtung eine für die elektronische Steuervorrichtung eindeutige Hardware-ID und eine einem Softwareprogramm zugeordnete Software-ID hinterlegt sind und wobei die Datenumschreibvorrichtung abhängig von einem Ergebnis des Abgleichens der Hardware-ID mit der Software-ID zum Umschreiben von Daten der nichtflüchtigen Speichervorrichtung berechtigt ist,
wobei eine Software-ID für die Entwicklung, die während der Entwicklung der elektronischen Steuervorrichtung verwendet wird, und eine Software-ID für die Serienfertigung, die während der Serienfertigung der elektronischen Steuervorrichtung verwendet wird, als die Software-ID in der nichtflüchtigen Speichervorrichtung hinterlegt sind, und
wobei der Prozessor die Hardware-ID und die Software-ID für die Serienfertigung aus der nichtflüchtigen Speichervorrichtung ausliest, die Hardware-ID mit der Software-ID für die Serienfertigung abgleicht und, wenn die Hardware-ID nicht mit der Software-ID für die Serienfertigung übereinstimmt, ferner die Software-ID für die Entwicklung aus der nichtflüchtigen Speichervorrichtung ausliest, um die Hardware-ID mit der Software-ID für die Entwicklung abzugleichen.

2. Elektronische Steuervorrichtung gemäß Anspruch 1, wobei die Hardware-ID in einem Bereich der nichtflüchtigen Speichervorrichtung hinterlegt ist, der von außen nicht wiederbeschreibbar ist, und die Software-ID in einem Bereich der nichtflüchtigen Speichervorrichtung hinterlegt ist, der von außen wiederbeschreibbar ist.

3. Elektronische Steuervorrichtung gemäß Anspruch 1, ferner aufweisend eine Schnittstelle, die eine Kommunikation mit einem externen Debugging-Werkzeug für Entwicklungszwecke ermöglicht, wobei
der Prozessor die Hardware-ID mit einer in das Debugging-Werkzeug für Entwicklungszwecke eingegebenen ID abgleicht und das Umschreiben von Daten der nichtflüchtigen Speichervorrichtung durch das Debugging-Werkzeug für Entwicklungszwecke auf Grundlage eines Ergebnisses des Abgleichs gestattet.

4. Elektronische Steuervorrichtung gemäß Anspruch 1, wobei die Hardware-ID unter Verwendung eines Ausgabeergebnisses einer Berechnung erzeugt wird, die mit einer vorbestimmten Berechnungsformel durchgeführt wird, wobei als eine Eingabe eine erste Information, die in der nichtflüchtigen Speichervorrichtung gespeichert und von außen lesbar ist, und eine zweite Information, die in der nichtflüchtigen Speichervorrichtung gespeichert und von außen nicht lesbar ist, verwendet werden.

5. Authentifizierungsverfahren, das von einem Prozessor einer elektronischen Steuervorrichtung ausgeführt wird, wobei die elektronische Steuervorrichtung den Prozessor, eine nichtflüchtige Speichervorrichtung, deren Daten elektrisch wiederbeschreibbar sind, und eine Schnittstelle aufweist, die eine Kommunikation mit einer externen Datenumschreibvorrichtung ermöglicht, wobei in der nichtflüchtigen Speichervorrichtung eine für die elektronische Steuervorrichtung eindeutige Hardware-ID und eine einem Softwareprogramm zugeordnete Software-ID hinterlegt sind und wobei die Datenumschreibvorrichtung abhängig von einem Ergebnis des Abgleichens der Hardware-ID mit der Software-ID zum Umschreiben von Daten der nichtflüchtigen Speichervorrichtung berechtigt ist, wobei das Verfahren den Prozessor veranlasst, die folgenden Schritte auszuführen:
Auslesen der Hardware-ID und der Software-ID für die Serienfertigung aus der nichtflüchtigen Speichervorrichtung, in der eine Software-ID für die Entwicklung, die während der Entwicklung der elektronischen Steuervorrichtung verwendet wird, und eine Software-ID für die Serienfertigung, die während der Serienfertigung der elektronischen Steuervorrichtung verwendet wird, als die Software-ID hinterlegt sind, und Abgleichen der Hardware-ID mit der Software-ID für die Serienfertigung; und, wenn die Hardware-ID nicht mit der Software-ID für die Serienfertigung übereinstimmt, ferner Auslesen der Software-ID für die Entwicklung aus der nichtflüchtigen Speichervorrichtung und Abgleichen der Hardware-ID mit der Software-ID für die Entwicklung.

## Revendications

1. Dispositif de commande électronique comprenant un processeur, un dispositif de stockage non volatil dont les données peuvent être réécrites électriquement, et une interface permettant la communication avec un dispositif externe de réécriture de données, un identifiant matériel propre au dispositif de commande électronique et un identifiant logiciel associé à un programme logiciel étant enregistrés dans le dispositif de stockage non volatil, et le dispositif de réécriture de données étant autorisé à réécrire des données du dispositif de stockage non volatil en fonction d'un résultat de la comparaison de l'identifiant matériel avec l'identifiant logiciel,
dans lequel un identifiant logiciel pour le développement utilisé pendant le développement du dispositif de commande électronique et un identifiant logiciel pour la production en série utilisé pendant la production en série du dispositif de commande électronique sont enregistrés en tant qu'identifiant logiciel dans le dispositif de stockage non volatil, et
dans lequel le processeur lit l'identifiant matériel et l'identifiant logiciel pour la production en série à partir du dispositif de stockage non volatil, compare l'identifiant matériel à l'identifiant logiciel pour la production en série et, lorsque l'identifiant matériel ne correspond pas à l'identifiant logiciel pour la production en série, lit en outre l'identifiant logiciel pour le développement à partir du dispositif de stockage non volatil afin de comparer l'identifiant matériel à l'identifiant logiciel pour le développement.

2. Dispositif de commande électronique selon la revendication 1, dans lequel l'identifiant matériel est enregistré dans une région du dispositif de stockage non volatil qui n'est pas réinscriptible depuis l'extérieur, et l'identifiant logiciel est enregistré dans une région du dispositif de stockage non volatil qui est réinscriptible depuis l'extérieur.

3. Dispositif de commande électronique selon la revendication 1, comprenant en outre une interface permettant la communication avec un outil de débogage externe pour le développement, dans lequel
le processeur compare l'identifiant matériel à un identifiant saisi dans l'outil de débogage pour le développement et autorise la réécriture de données du dispositif de stockage non volatil par l'outil de débogage pour le développement sur la base d'un résultat de la comparaison.

4. Dispositif de commande électronique selon la revendication 1, dans lequel l'identifiant matériel est généré à l'aide d'un résultat de sortie d'un calcul effectué avec une formule de calcul prédéterminée utilisant, en tant qu'entrée, une première information qui est stockée dans le dispositif de stockage non volatil et qui est lisible depuis l'extérieur et une deuxième information qui est stockée dans le dispositif de stockage non volatil et qui est illisible depuis l'extérieur.

5. Procédé d'authentification exécuté par un processeur d'un dispositif de commande électronique, le dispositif de commande électronique comprenant le processeur, un dispositif de stockage non volatil dont les données peuvent être réécrites électriquement, et une interface permettant la communication avec un dispositif externe de réécriture de données, un identifiant matériel propre au dispositif de commande électronique et un identifiant logiciel associé à un programme logiciel étant enregistrés dans le dispositif de stockage non volatil, et le dispositif de réécriture de données étant autorisé à réécrire des données du dispositif de stockage non volatil en fonction d'un résultat de la comparaison de l'identifiant matériel avec l'identifiant logiciel, le procédé amenant le processeur à exécuter les étapes consistant à :
lire, à partir du dispositif de stockage non volatil dans lequel un identifiant logiciel pour le développement utilisé pendant le développement du dispositif de commande électronique et un identifiant logiciel pour la production en série utilisé pendant la production en série du dispositif de commande électronique sont enregistrés en tant qu'identifiant logiciel, l'identifiant matériel et l'identifiant logiciel pour la production en série, et comparer l'identifiant matériel à l'identifiant logiciel pour la production en série ; et, lorsque l'identifiant matériel ne correspond pas à l'identifiant logiciel pour la production en série, lire en outre l'identifiant logiciel pour le développement à partir du dispositif de stockage non volatil et comparer l'identifiant matériel à l'identifiant logiciel pour le développement.
